# DEMANDE DE BREVET EUROPEEN

(11) **EP 1 728 933 A1**
(43) Date de publication de la demande: **06.12.2006**
(21) Numéro de dépôt: 06300550.8
(22) Date de dépôt: 01.06.2006
(51) Int. Cl.: E03F 5/22

(54) **Dispositif de collecte ou de vidange d'effluents plus particulierement adapte aux ports de plaisance**

(30) Priorité: 02.06.2005 FR 0551470
(71) Demandeur: Inoviat, 44830 Bouaye (FR)
(72) Inventeur: CHARRIAU, Patrick, 85620, ROCHESERVIERE (FR); DION, Jean-François, 44830, BRAINS (FR); LOZACH, Gérard, 44240, LA CHAPELLE SUR ERDRE (FR); BIGOT, Sébastien, 44700, ORVAULT (FR)
(74) Mandataire: Fantin, Laurent

(57) **Abrégé**

L'objet de l'invention est un dispositif de collecte et de vidange d'effluents, susceptible de permettre la vidange d'une cuve d'effluents de bateau, comprenant une partie fixe (24) avec des moyens de liaison à un réseau de collecte et de vidange, un tuyau (28) dont une première extrémité est reliée aux moyens de liaison à un réseau de collecte et de vidange et dont la seconde extrémité dite libre comprend un embout (42) susceptible d'être relié ou de se connecter à l'ouverture d'une cuve d'effluents de bateaux ainsi qu'une pompe susceptible de permettre l'écoulement des effluents à travers ledit tuyau (28) depuis la cuve d'effluents de bateau vers le réseau de collecte et de vidange, caractérisé en ce que ladite pompe est disposée au niveau de l'extrémité libre du tuyau (28).

## Description

La présente invention se rapporte à un dispositif de collecte ou de vidange d'effluents plus particulièrement adapté aux ports de plaisance. Elle se rapporte également à une installation pour des ports comportant une pluralité de dispositifs répartis sur les pontons ou sur les quais et reliés à un réseau de collecte ou de vidange.

Les ports de plaisance sont rarement équipés en appareils de collecte des effluents de bateaux car les dispositifs existants ne donnent pas satisfaction. Or, la qualité des eaux du port est un des éléments essentiels de l'image du port. De plus, des normes de plus en plus draconiennes tentent d'interdire les rejets des effluents en mer ou dans les eaux du port afin de préserver notre environnement.

Les dispositifs existants, décrits notamment dans le document EP-0.312.784 comprennent généralement une cuve de collecte des effluents au niveau de laquelle est prévue une pompe fixe dont le conduit de refoulement est relié à la cuve et dont le conduit d'admission est relié à un tuyau éventuellement enroulé sur un dévidoir. Ainsi, le tuyau comprend une première extrémité reliée au conduit d'admission de la pompe fixe et une seconde extrémité avec un embout susceptible de coopérer avec un orifice prévu au niveau d'une cuve d'effluents. Avantageusement, la seconde extrémité du tuyau comprend un clapet antirefoulement, généralement une vanne quart de tour.

Ainsi, lorsqu'un utilisateur souhaite vidanger la cuve d'effluents de son bateau, il déroule le tuyau, connecte l'embout du tuyau à ladite cuve et active la pompe après avoir ouvert la vanne quart de tour. Cette dernière aspire depuis l'autre extrémité du tuyau les effluents. A la fin, il arrête la pompe et ferme la vanne.

Ce type de dispositifs ne donnent pas pleinement satisfaction pour les raisons suivantes :
En premier lieu, ce dispositif ne permet pas d'aspirer correctement les déchets pâteux ou solides.
De plus, il est généralement nécessaire de prévoir une pompe de forte puissance pour garantir le pompage compte tenu de la longueur du tuyau à travers laquelle ladite pompe doit aspirer les effluents.
D'autre part, dans le cas de ports à grands marnages, cette opération de vidange ne peut se faire que pendant certaines périodes de la marée, notamment autour de la marée haute, à moins de prévoir des dispositifs de relevage coûteux.
Enfin, lorsque la pompe est arrêtée, une ouverture malencontreuse de la vanne quart de tour peut provoquer la vidange du tuyau et le refoulement des effluents contenus dans ledit tuyau, et par conséquent une pollution du site.

Par conséquent, la présente invention vise à pallier les inconvénients de l'art antérieur en proposant un dispositif de collecte ou de vidange d'effluents améliorant le pompage des effluents et limitant les risques de pollution par refoulements intempestifs des effluents.

A cet effet, l'invention a pour objet un dispositif de collecte et de vidange d'effluents, notamment pour vidanger une cuve d'effluents de bateau, comprenant une partie fixe avec des moyens de liaison à un réseau de collecte et de vidange, un tuyau dont une première extrémité est reliée aux moyens de liaison à un réseau de collecte et de vidange et la seconde extrémité dite libre comprend un embout susceptible d'être relié ou de se connecter à l'ouverture d'une cuve d'effluents de bateau et une pompe permettant l'écoulement des effluents à travers ledit tuyau depuis la cuve d'effluents de bateau vers le réseau de collecte et de vidange, caractérisé en ce que la pompe est disposée au niveau de l'extrémité libre du conduit.

Cette solution permet d'une part d'améliorer le pompage, rendant l'opération possible dans les ports à grand marnage ou même si le tuyau est long, et d'autre part, d'éviter les risques de pollution par refoulement dans la mesure où la quantité d'effluents présents entre l'extrémité libre du tuyau et la pompe est très faible.

D'autres caractéristiques et avantages ressortiront de la description qui va suivre de l'invention, description donnée à titre d'exemple uniquement, en regard des dessins annexés sur lesquels :
- la figure 1 est une vue de dessus d'une partie d'un port équipé d'un réseau comportant des dispositifs de collecte et de vidange d'effluents selon l'invention,
- les figures 2A et 2B sont des vues en perspective d'une borne de collecte et de vidange d'effluents selon l'invention respectivement dans un état de repos et de pompage,
- les figures 3A et 3B sont des schémas illustrant le dispositif de l'invention respectivement dans un premier état dit de pompage et un second état dit de rinçage,
- la figure 4 est une vue en perspective illustrant en détails l'intérieur du dispositif de l'invention,
- la figure 5 est une vue en perspective illustrant en détails une pompe disposée au niveau de la partie mobile,
- la figure 6 est une coupe selon le plan VI-VI de la figure 5 illustrant la pompe, et
- la figure 7 est une coupe selon le plan VII-VII de la figure 5 illustrant la pompe.

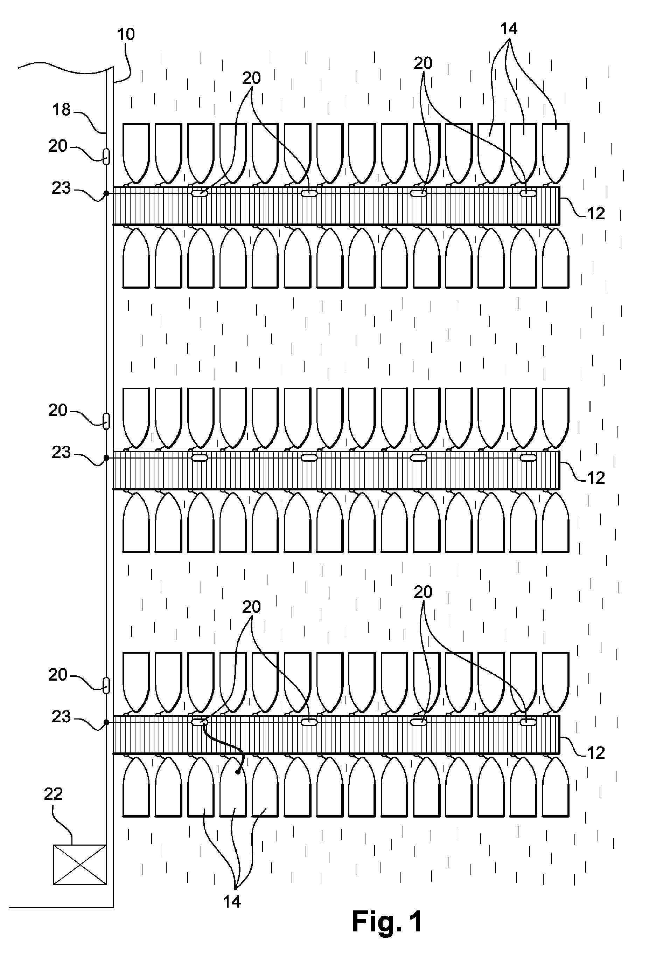

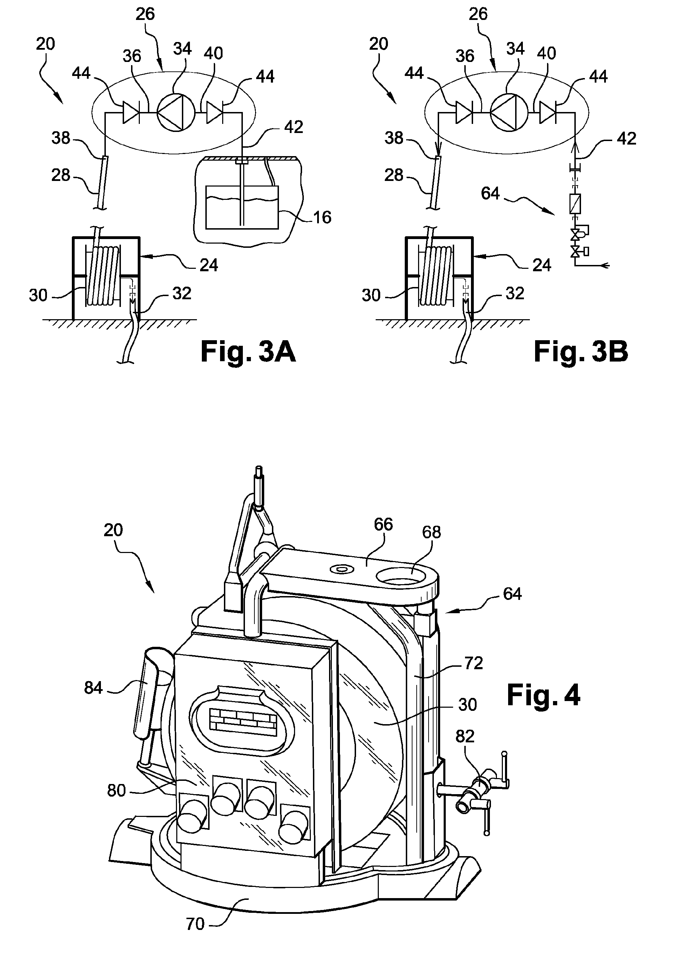

Sur la figure 1, on a représenté un port, plus particulièrement un port de plaisance avec un quai 10 et des pontons 12 au niveau desquels sont amarrés des bateaux 14. Certains de ces bateaux 14 comprennent un contenant appelé par la suite cuve susceptible de contenir des effluents. Une cuve 16 d'effluents est représentée de manière schématique sur la figure 3A. Elle possède généralement une ouverture pour la vidange.

Les effluents peuvent être de différentes natures et consistances, par exemple être plus ou moins visqueux ou pâteux.

Selon l'invention, le port comprend une installation de collecte et de vidange d'effluents comportant d'une de part un réseau 18 de collecte des effluents formé de conduits courant le long des pontons et en bordure des quais, et d'autre part, au moins un dispositif de collecte 20 relié ou connecté audit réseau 18. En fonction des cas, l'installation de collecte et de vidange peut être reliée aux égouts, à une station de traitement des effluents ou à un réservoir 22 de collecte des effluents. Selon l'importance du port, le réseau peut comprendre des noeuds 23 au niveau de chacun desquels sont prévus des regards disconnecteurs pour orienter les effluents collectés en direction des égouts, de la station de traitement ou du réservoir.

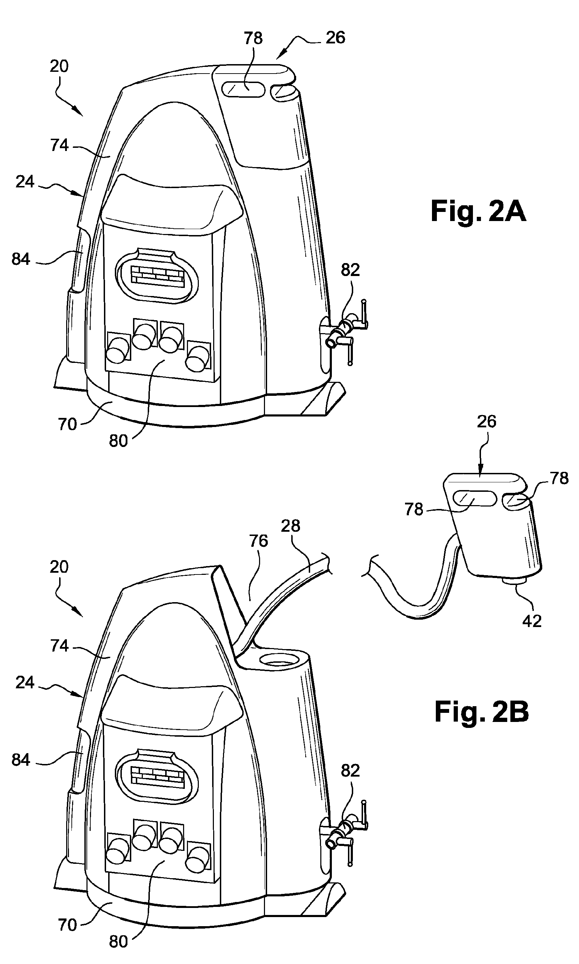

Un dispositif de collecte 20 est représenté sur les figures 2A, 2B, 3A, 3B et 4. Il se présente sous la forme d'une borne fixe disposée au niveau des pontons ou des quais.

Chaque borne comprend une partie fixe 24 reliée au réseau 18 et une partie mobile 26 reliée au réseau 18 par l'intermédiaire d'un tuyau 28. Par tuyau, on entend tout dispositif permettant l'écoulement d'effluents.

Avantageusement, la partie fixe 24 comprend un dévidoir 30 sur lequel peut s'enrouler le tuyau 28, une des extrémités 32 du tuyau étant reliée au réseau 18. Selon une caractéristique importante de l'invention, la partie mobile 26 comprend une pompe 34 dont la sortie 36, appelée également conduit de refoulement des effluents, est reliée à la seconde extrémité libre 38 du tuyau 28 et dont l'entrée 40, appelée également conduit d'aspiration des effluents, comporte un conduit très court dont l'extrémité débouchante 42 se présente sous la forme d'un embout susceptible d'être relié ou de se connecter à l'ouverture d'une cuve d'effluents de bateaux.

Cet agencement permet d'optimiser le fonctionnement du dispositif dans la mesure où la pompe permet de pousser les effluents et non de les aspirer à travers un tuyau lorsqu'elle est disposée, dans le sens d'aspiration, après le tuyau comme pour les dispositifs de l'art antérieur.

De plus, le fait de prévoir un conduit très court entre la pompe et l'extrémité susceptible d'être connectée à la cuve d'effluents et non la globalité du tuyau 28 permet de réduire fortement la quantité d'effluents présents en amont de la pompe dans le sens de l'aspiration, ce qui évite de refouler une grande quantité d'effluents en cas d'une mauvaise manipulation.

De préférence, la sortie 36 et/ou l'entrée 40 comprennent des clapets antiretour 44 pour limiter les risques de refoulement d'effluents.

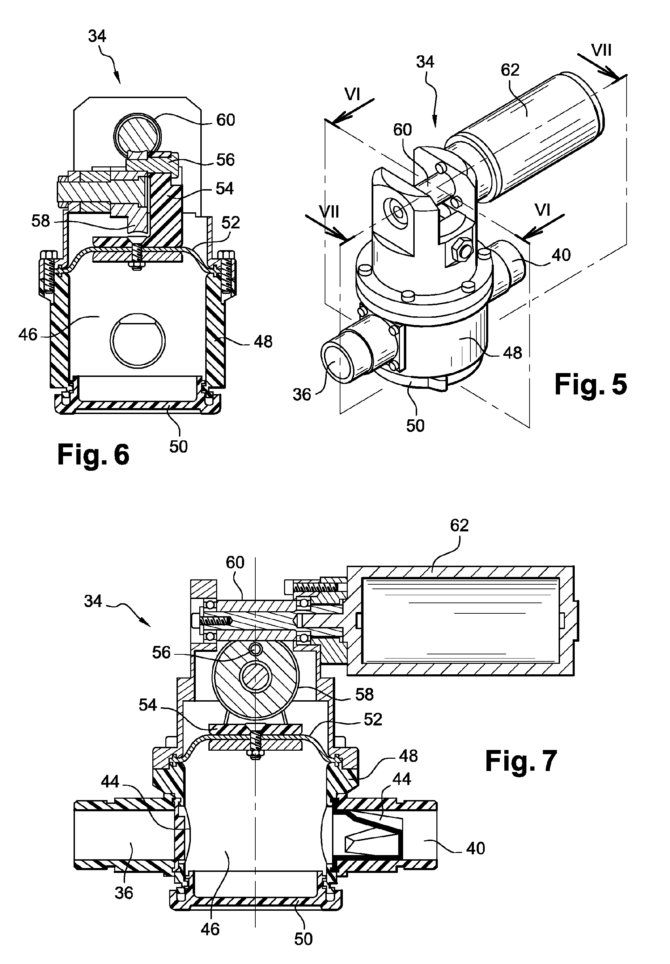

Selon un mode de réalisation préféré et illustré sur les figures 5 à 7, la pompe est une pompe à membrane. Cet agencement autorise un fonctionnement à vide, le passage de gros morceaux et permet un auto-amorçage. Par ailleurs, si le bateau comprend une pompe dans sa cuve d'effluents, comme indiqué dans le document US-4.324.007, on peut utiliser le dispositif de l'invention en faisant fonctionner la pompe prévu dans la cuve et non la pompe à membrane du dispositif, cette dernière ne s'opposant au passage des effluents poussés par la pompe présente dans la cuve du bateau.

Cette pompe comprend une chambre 46 avec une paroi périphérique 48 en forme sensiblement de cylindre obturé à une extrémité par un fond 50 et à l'autre extrémité par une membrane 52 susceptible d'être déformée par des moyens de translation de manière à faire varier le volume de la chambre 46 de façon cyclique. L'entrée 40 et la sortie 36 débouche dans la chambre 46 au niveau de la paroi périphérique 48 de manière diamétralement opposée.

Selon un mode de réalisation, les moyens de translation pour assurer la déformation comprennent une biellette 54 dont une extrémité est reliée à la membrane 52 et l'autre extrémité est reliée à un axe de biellette 56 monté de manière excentrée sur une roue dentée 58 elle-même entraînée en rotation par l'intermédiaire d'un axe de vis sans fin 60 entraîné en rotation par un moteur 62. Toutefois, d'autres solutions techniques pourraient être envisagées pour assurer la déformation de manière cyclique de la membrane 52.

Selon une variante améliorée de l'invention, le tuyau 28 est logé dans la partie fixe 24 pendant les périodes de non utilisation, notamment grâce au dévidoir 30, et la partie fixe 24 comprend une zone pour recevoir la partie mobile 26. Cet agencement permet d'obtenir un ensemble esthétique et d'éviter que le tuyau et la partie mobile traînent au niveau du sol et constituent des obstacles.

Selon une autre caractéristique de l'invention, le dispositif comprend des moyens de rinçage 64 avec une arrivée de fluide susceptible d'être connectée à l'entrée 40 de la pompe 34.

Selon un mode de réalisation, les moyens de rinçage comprennent une embase 66 susceptible de recevoir la partie mobile 26 avec un orifice 68 susceptible de coopérer avec l'embout 42 de la pompe, ledit orifice étant relié à l'arrivée de fluide de rinçage. Ainsi, lorsque la partie mobile 26 contenant la pompe est replacée sur l'embase, un cycle de rinçage commence en faisant circuler le fluide de rinçage depuis l'embout 42, à travers la pompe 34 et le tuyau 28. Avantageusement, un capteur est prévu pour détecter la présence de la partie mobile 26 sur l'embase 66. Dès que le capteur relève la présence de la partie mobile, comme illustré de manière schématique sur la figure 3B, la pompe 34 est mise en fonctionnement et aspire du fluide provenant de l'orifice 68.

Selon les variantes, on peut utiliser comme fluide de rinçage de l'eau provenant d'un réseau d'eau ou de l'eau de mer.

Le rinçage du dispositif permet d'éviter le refoulement accidentel des effluents.

Selon un mode de réalisation illustré sur la figure 4, la borne comprend un socle 70 surmonté d'un châssis 72 supportant le dévidoir 30 et l'embase 66. Comme illustré sur les figures 2A et 2B, la borne comprend une coque 74 avec un dégagement 76 susceptible de loger la partie mobile 26. Les formes de la partie mobile 26 coopèrent avec celle de la borne lorsque ladite partie mobile 26 repose sur l'embase 66. La partie mobile 26 comprend des formes, notamment des poignées 78, pour faciliter sa manipulation.

En complément, le dévidoir 30 comprend des moyens pour rembobiner de manière automatique le tuyau 28.

Comme indiqué précédemment, la borne 20 est reliée à un réseau 18 de collecte des effluents. Elle peut être également reliée à un réseau d'eau potable pour le rinçage et/ou pour la distribution en eau potable ainsi qu'à un réseau filaire, notamment électrique pour la distribution d'électricité.

De préférence, la borne comprend un tableau 80 avec des prises électriques pour permettre le raccordement des bateaux au réseau électrique et des raccords 82 pour permettre le raccordement des bateaux au réseau d'eau potable. En complément, la borne peut comprendre des moyens pour assurer le contrôle de la distribution des flux tels que l'eau et l'électricité, par exemple des moyens de paiement, des moyens pour déterminer la consommation ou autres.

Avantageusement, la borne comprend des moyens 84 de signalisation.

Le fonctionnement du dispositif de collecte et de vidange des effluents est maintenant décrit au regard des différentes figures. Au repos, la partie mobile 26 repose sur l'embase 26 comme illustré sur la figure 2A. Lorsqu'un utilisateur souhaite vidanger sa cuve d'effluents, il saisit la partie mobile 26. En tirant sur la partie mobile 26, l'utilisateur déroule le tuyau 28, comme illustré sur la figure 2B, jusqu'à faire coïncider l'embout 42 de la pompe avec l'orifice de la cuve d'effluents de son bateau, comme illustré sur la figure 3A. Selon les cas, la pompe peut être activée soit automatiquement lorsque la partie mobile 26 est soulevée de l'embase 66 ou lorsque l'embout 42 est introduit dans la cuve du bateau ou soit manuellement à l'aide d'une commande actionnée par l'utilisateur.

A la fin de l'opération, l'utilisateur dégage l'embout 42 de la cuve et replace la partie mobile 26 sur son embase 66. Lorsque la partie mobile 26 est remise sur l'embase 66, un cycle de rinçage permet d'assurer l'évacuation des effluents en direction du réseau de collecte.

Bien entendu, l'invention n'est évidemment pas limitée au mode de réalisation représenté et décrit ci-dessus, mais en couvre au contraire toutes les variantes, notamment en ce qui concerne, les formes, les dimensions et les matériaux des différents éléments du dispositif de collecte.

## Revendications

1. Dispositif de collecte et de vidange d'effluents, susceptible de permettre la vidange d'une cuve d'effluents de bateau, comprenant une partie fixe (24) avec des moyens de liaison à un réseau de collecte et de vidange (18), un tuyau (28) dont une première extrémité est reliée aux moyens de liaison à un réseau de collecte et de vidange et dont la seconde extrémité dite libre comprend un embout susceptible d'être relié ou de se connecter à l'ouverture d'une cuve d'effluents de bateaux ainsi qu'une pompe (34) susceptible de permettre l'écoulement des effluents à travers ledit tuyau (28) depuis la cuve d'effluents de bateau vers le réseau de collecte et de vidange (18), **caractérisé en ce que** ladite pompe (34) est disposée au niveau de l'extrémité libre du tuyau (28).

2. Dispositif de collecte et de vidange d'effluents selon la revendication 1, **caractérisé en ce que** la pompe (34) est une pompe à membrane.

3. Dispositif de collecte et de vidange d'effluents selon la revendication 2, **caractérisé en ce que** la pompe à membrane (34) comprend une chambre (46) délimitée par une membrane (52) susceptible d'être déformée par des moyens de translation de manière à faire varier le volume de la chambre (46) de manière cyclique, l'entrée (40) et la sortie (36) de la pompe débouchant dans ladite chambre (46).

4. Dispositif de collecte et de vidange d'effluents selon la revendication 3, **caractérisé en ce que** les moyens de translation pour assurer la déformation comprennent une biellette (54) dont une extrémité est reliée à la membrane (52) et l'autre extrémité est reliée à un axe de biellette (56) monté de manière excentrée sur une roue dentée (58) elle-même entraînée en rotation par l'intermédiaire d'un axe de vis sans fin (60) entraîné en rotation par un moteur (62).

5. Dispositif de collecte et de vidange d'effluents selon l'une quelconque des revendications précédentes, **caractérisé en ce qu'**il comprend des moyens de rinçage (64) avec une arrivée de fluide susceptible d'être connectée à l'entrée (40) de la pompe (34).

6. Dispositif de collecte et de vidange d'effluents selon la revendication 5, **caractérisé en ce que** les moyens de rinçage comprennent une embase (66) susceptible de recevoir la pompe (34) avec un orifice (68) susceptible de coopérer avec l'embout (42) de la pompe, ledit orifice étant relié à l'arrivée de fluide de rinçage.

7. Dispositif de collecte et de vidange d'effluents selon l'une quelconque des revendications précédentes, **caractérisé en ce que** la partie fixe (24) est adaptée pour permettre de loger le tuyau (28) lorsqu'il n'est pas utilisé et comprend une zone pour recevoir une partie mobile (26) dans laquelle est prévue la pompe (34).

8. Installation de collecte et de rinçage d'effluents, plus particulièrement adapté aux ports de plaisance comportant d'une de part un réseau (18) de collecte des effluents formé de conduits courant le long des pontons et en bordure des quais, et d'autre part, au moins un dispositif de collecte et de vidange selon l'une quelconque des revendications précédentes connecté audit réseau (18).
